## Europäisches Patentamt

## European Patent Office

## Office européen des brevets

(19)

(11) Veröffentlichungsnummer: **0 082 341**
**B1**

(12)

# EUROPÄISCHE PATENTSCHRIFT

(45) Veröffentlichungstag der Patentschrift:
**02.04.86**

(51) Int. Cl.⁴: **B 62 M 9/08**

(21) Anmeldenummer: **82110895.8**

(22) Anmeldetag: **25.11.82**

(54) **Tretgetriebe für Fahrräder.**

(30) Priorität: **11.12.81 DE 3149018**

(43) Veröffentlichungstag der Anmeldung:
**29.06.83 Patentblatt 83/26**

(45) Bekanntmachung des Hinweises auf die Patenterteilung:
**02.04.86 Patentblatt 86/14**

(84) Benannte Vertragsstaaten:
**AT BE CH DE FR GB IT LI LU NL SE**

(56) Entgegenhaltungen:
**BE - A - 416 553**
**DE - C - 624 983**
**GB - A - 2 071 029**

(73) Patentinhaber: **Fehl, Hans Heinrich, Lauterbacher Strasse 46, D-6423 Wartenberg 1 (DE)**
Patentinhaber: **Fehl, Reinhard, Lauterbacher Strasse 46, D-6423 Wartenberg 1 (DE)**

(72) Erfinder: **Fehl, Hans Heinrich, Lauterbacher Strasse 46, D-6423 Wartenberg 1 (DE)**
Erfinder: **Fehl, Reinhard, Lauterbacher Strasse 46, D-6423 Wartenberg 1 (DE)**

(74) Vertreter: **Schlagwein, Udo, Dipl.-Ing., Anwaltsbüro Ruppert & Schlagwein Bahnhofsallee 11, D-6350 Bad Nauheim (DE)**

**Beschreibung**

Die Erfindung bezieht sich auf ein Tretgetriebe für Fahrräder, bestehend aus einem drehbar gelagerten, sechseckigen Kettenrad und zwei jeweils mit einem Pedal versehenen Tretkurbeln, welche durch jeweils eine Sechseckseite des Kettenrades verlaufen. Ein solches Tretgetriebe ist in dem belgischen Patent BE-A-416 553 dargestellt und beschrieben.

Durch ein sechseckiges Kettenrad schwankt das Übersetzungsverhältnis des Tretgetriebes während einer Kurbelumdrehung sechs Mal zwischen einem Maximal- und einem Minimalwert. Dies führt zu einem ungleichförmigen Kraftbedarf in tangentialer Richtung, um eine gleichmässige Vortriebskraft zu erzeugen. Die dadurch eintretenden Wirkungen sind offenbar so gering, dass sechseckige Kettenräder in der Praxis nicht gebaut wurden und die genannte belgische Patentschrift selbst in der Fachwelt gänzlich in Vergessenheit geriet.

Die mit einem ein kreisförmiges Kettenrad aufweisenden Tretgetriebe erzielbaren Antriebskräfte schwanken während einer Kurbelumdrehung sinuslinienförmig zwischen 0 und einem Maximalwert. Der 0-Wert ergibt sich jeweils, wenn die Tretkurbeln sich im oberen und unteren Totpunkt befinden, während der Maximalwert erreichbar ist, wenn beide Tretkurbeln waagerecht ausgerichtet sind. Vor allem bei ansteigender Fahrstrecke bereitet das Überwinden der Totpunkte Schwierigkeiten, weil das Fahrrad dort rasch an Fahrt verliert, wenn die Antriebskraft absinkt.

Um die Totpunkte leichter überwinden zu können ist es bekannt, die Pedale jeweils pendelnd am freien Ende der zugeordneten Tretkurbeln anzuordnen. Dadurch können die Pedale über die Totpunkte hinausschwingen, wenn die Tretkurbeln sich in senkrechter Stellung befinden, so dass auch dann ein Drehmoment erzeugt werden kann. Als Beispiel für diesen Stand der Technik sei das deutsche Gebrauchsmuster DE-U-8 104 546 genannt. Fahrräder mit solchen pendelnden Pedalen haben sich jedoch bisher nicht durchgesetzt, vermutlich weil der mit ihnen erzielbare Vortriebsgewinn als zu gering eingeschätzt wurde, um die dazu erforderlichen, umfangsreichen Änderungen des Tretgetriebes und des Fahrrades als Ganzes zu rechtfertigen.

Der Erfindung liegt die Aufgabe zugrunde, ein Tretgetriebe der eingangs genannten Art zu entwickeln, mit dem die Überwindung der Totpunkte leichter möglich ist, als bei herkömmlichen Tretgetrieben.

Diese Aufgabe wird erfindungsgemäss bei einem Tretgetriebe der eingangs genannten Art auf überraschend einfache Weise dadurch gelöst, dass die Pedale jeweils pendelnd am freien Ende der zugeordneten Tretkurbel aufgehangen sind und dass die Zahnteilung des Kettenrades so gewählt ist, dass an den sechs Ecken des Kettenrades sich jeweils eine Zahnlücke befindet.

Die Erfindung besteht mithin in der Kombination eines sechseckigen Kettenrades, wie es durch die belgische Patentschrift 416 553 bekannt ist, mit pendelnd aufgehangenen Pedalen gemäss dem deutschen Gebrauchsmuster 8 104 546 und weiterhin darin, dass das Kettenrad eine bestimmte Gestaltung hat. Die durch das sechseckige Kettenrad periodisch veränderte Umlaufgeschwindigkeit der Tretkurbeln bewirkt ein verstärktes Durchschwingen der pendelnd aufgehangenen Pedale und führt zu einer erheblichen Vergrösserung des Drehmomentes im oberen Quadranten. Ein Benutzer eines Fahrrades mit einem erfindungsgemässen Tretgetriebe kann im Gegensatz zu Fahrrädern mit herkömmlichem Tretgetriebe mit einer während einer Kurbelumdrehung weitgehend konstanten Kraft treten, was von der Muskelbeanspruchung her günstiger ist und es ihm ermöglicht, mit geringerem Kraftaufwand sein Fahrrad zu bewegen, insbesondere auf Steigungsstrecken. Eine leichte Wölbung der Seiten des Kettenrades führt zu einer Minderung der Reibkräfte zwischen Kette und Kettenrad. Es hat sich weiterhin gezeigt, dass bei Verwendung solcher Kettenräder es mit herkömmlichen Schaltmitteln ohne weiters möglich ist, die Kette bei zwei nebeneinander angeordneten Kettenrädern mit unterschiedlichem Umfang von dem einen auf das andere Kettenrad umzusetzen. Ebenso schaltbar sind zwei nebeneinander angebrachte Kettenräder mit unterschiedlichem Umfang in runder und sechseckiger Ausführung. Die Sechseckseiten brauchen nicht notwendigerweise alle gleich stark nach aussen gewölbt zu sein.

Zur Minderung der Reibung trägt es auch das Merkmal bei, dass sich an den sechs Ecken des Kettenrades jeweils eine Zahnlücke befindet.

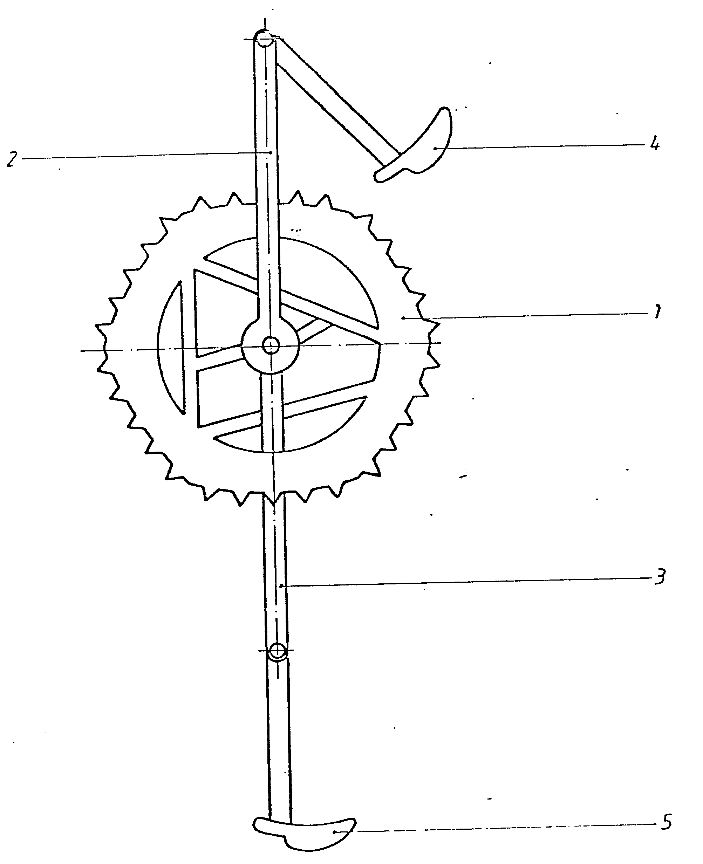

Die Erfindung lässt zahlreiche Ausführungsformen zu. Zu ihrer Verdeutlichung ist ein Tretgetriebe mit sechseckigem Kettenrad in der Zeichnung dargestellt und wird nachfolgend beschrieben.

Das dargestellte Tretgetriebe für Fahrräder besteht im wesentlichen aus einem drehbar gelagerten Kettenrad 1, zwei einander genau gegenüberliegenden Tretkurbeln 2, 3 und jeweils einem pendelnd aufgehangenen Pedal 4, 5 am freien Ende jeder Tretkurbel 2, 3. Für die Erfindung wesentlich ist, dass das Kettenrad 1 nicht rund, sondern ungefähr sechseckig ist, wobei die Zahnteilung so gewählt wurde, dass sich an den sechs Ecken des Kettenrades 1 jeweils eine Zahnlücke befindet.

Um die Reibverluste des Tretgetriebes möglichst gering zu halten, sind die Sechseckseiten nicht genau gerade, sondern nach aussen hin geringfügig gewölbt, wie das in der Zeichnung zu erkennen ist. Da mit dem erfindungsgemässen Tretgetriebe die Totpunkte mit möglichst geringer Kraft überwunden werden sollen, ist es notwendig, dass die Tretkurbeln 2, 3 jeweils in etwa durch die Mitte zweier gegenüberliegenden Seiten des sechseckigen Kettenrades führen. Die Tretkurbeln 2, 3 bilden dann in etwa einen rechten Winkel mit den Sechseckseiten.

Für verschiedene Fahrräder können sich Abweichungen von der Stellung der Tretkurbeln relativ zum Kettenrad ergeben.

**Patentansprüche**

1. Tretgetriebe für Fahrräder, bestehend aus einem drehbar gelagerten, sechseckigen Kettenrad (1) und zwei jeweils mit einem Pedal (4, 5) versehenen Tretkurbeln (2, 3), welche durch jeweils eine Sechseckseite des Kettenrades (1) verlaufen, dadurch gekennzeichnet, dass die Pedale (4, 5) jeweils pendelnd am freien Ende der zugeordneten Tretkurbel (2, 3) aufgehangen sind und dass die Zahnteilung des Kettenrades (1) so gewählt ist, dass an den sechs Ecken des Kettenrades (1) sich jeweils eine Zahnlücke befindet.

2. Tretgetriebe nach Anspruch 1, dadurch gekennzeichnet, dass die Sechseckseiten nach aussen leicht gewölbt sind.

## Claims

1. Pedal-operated gear for bicycles, comprising a pivotably supported hexagonal sprocket wheel (1) and two pedal cranks (2, 3) each provided with a pedal (4, 5), the pedal cranks (2, 3) running through one hexagonal side of the sprocket wheel (1), characterised in that the pedals (4, 5) are each swingingly suspended at the free end of the respective pedal cranks (2, 3) and that the tooth pitch of the sprocket wheel (1) is selected such that a tooth gap is located at each of the six corners of the hexagon.

2. Pedal-operated gear according to claim 1, characterised in that the sides of the hexagon are slightly arched outward.

## Revendications

1. Pédalier pour bicyclettes constitué d'une roue dentée (plateau) hexagonale (1) montée de manière à pouvoir tourner et de deux manivelles de pédalier (2, 3) comportant chacune une pédale (4, 5), les manivelles passant chacune par un côté de l'hexagone de la roue dentée (1), caractérisé en ce que les pédales (4, 5) sont suspendues oscillantes chacune à l'extrémité libre des manivelles de pédalier (2, 3) correspondantes et en ce que le pas de la roue dentée (1) est choisi de telle manière qu'il y ait une absence de dent à chacun des six sommets de la roue dentée (1).

2. Pédalier selon la revendication 1, caractérisé en ce que les côtés de l'hexagone présentent une légère convexité.